(19) Europäisches Patentamt
European Patent Office
Office européen des brevets

(11) **EP 2 979 114 B1**

(12) **FASCICULE DE BREVET EUROPEEN**

(45) Date de publication et mention de la délivrance du brevet:
**03.05.2017 Bulletin 2017/18**

(21) Numéro de dépôt: **14711260.1**

(22) Date de dépôt: **20.03.2014**

(51) Int Cl.:
***G01T 1/20*** $^{(2006.01)}$

(86) Numéro de dépôt international:
**PCT/EP2014/055589**

(87) Numéro de publication internationale:
**WO 2014/154556 (02.10.2014 Gazette 2014/40)**

(54) **DETECTEUR DE TRACES DE PARTICULES IONISANTES**

DETEKTOR ZUM NACHWEIS DER SPUREN VON IONISIERENDEN TEILCHEN

DETECTOR FOR DETECTING THE TRACES OF IONIZING PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2013 FR 1352626**

(43) Date de publication de la demande:
**03.02.2016 Bulletin 2016/05**

(73) Titulaires:
• **Commissariat à l'Énergie Atomique et aux Énergies Alternatives**
**75015 Paris (FR)**
• **Centre National de la Recherche Scientifique (C.N.R.S.)**
**75794 Paris Cedex 16 (FR)**

(72) Inventeurs:
• **LEBRUN, François**
**F-94500 Champigny sur Marne (FR)**
• **TERRIER, Régis**
**F-75014 Paris (FR)**
• **LAURENT, Philippe**
**F-91440 Bures sur Yevette (FR)**
• **OLIVETTO, Christian**
**F-94260 Fresnes (FR)**
• **BREELLE, Eric**
**F-94140 Alfortville (FR)**

(74) Mandataire: **Cabinet Camus Lebkiri**
**25 rue de Maubeuge**
**75009 Paris (FR)**

(56) Documents cités:
EP-A2- 1 967 868        WO-A1-2012/058440
DE-A1-102006 042 484    US-B2- 8 017 906

**Description**

## DOMAINE TECHNIQUE

La présente invention concerne un détecteur de traces de particules ionisantes, les traces étant produites par scintillation lors du passage des particules ionisantes dans un scintillateur.

## ETAT DE LA TECHNIQUE ANTERIEUR

Un scintillateur est un matériau qui émet de la lumière suite à l'absorption d'un rayonnement ionisant, tel un photon ou une particule chargée. En effet, lorsque ce matériau est traversé par une particule chargée, elle-même éventuellement produite par un photon, les molécules de ce matériau sont « excitées », c'est-à-dire qu'un électron passe d'un niveau énergétique à un niveau énergétique supérieur. La désexcitation de cet électron, c'est-à-dire la redescente de l'électron à un niveau moins énergétique, s'accompagne de l'émission d'un photon, qui en l'occurrence est un photon visible. Lorsqu'une particule (telle qu'un électron, un alpha, ou un ion par exemple) se propage dans un matériau scintillant, de la lumière est émise le long de la trajectoire. La quantité de lumière produite peut être reliée à la quantité d'énergie apportée par la particule ayant interagi dans le matériau. La mesure de cette quantité de lumière permet ainsi de mesurer l'énergie déposée dans le scintillateur. Cette dernière application est la plus fréquente mais ces détecteurs sont également utilisés pour localiser des interactions. Cette localisation peut s'accomplir en utilisant soit en segmentant le scintillateur soit par détermination du barycentre de la lumière émise comme dans les caméras gamma.

Ces caméras gamma sont principalement utilisées pour détecter des matériaux radioactifs, par exemple en cas de fuite dans une centrale nucléaire, et dans le domaine médical afin d'observer les organes d'un patient et les perturbations éventuelles de ces organes générées par des maladies. Pour ce faire, un élément radioactif qui émet des photons gamma est injecté dans le corps d'un patient. L'observation des photons gamma permet de connaître la distribution de l'élément radioactif dans l'organisme. La caméra gamma permet d'observer ces photons gamma. Pour ce faire, une caméra gamma comporte généralement :

- Un collimateur qui permet de sélectionner la direction des photons qui vont former l'image dans le plan de détection ;
- Un scintillateur qui permet de convertir les photons gamma en photons visibles ;
- Des photomultiplicateurs qui permettent de convertir les photons visibles en signaux électriques.

Les collimateurs de l'art antérieur sont généralement formés de tubes très fins qui permettent de sélectionner les photons gammas reçus par le scintillateur. Plus les tubes du collimateur sont fins, meilleure est la résolution spatiale de la caméra gamma, mais plus la quantité de photons reçue par le scintillateur est faible. Ainsi, dans les caméras gamma de l'art antérieur, il est nécessaire d'injecter des doses substantielles de produit radioactif pour obtenir des images exploitables.

Par ailleurs, il existe aussi dans l'art antérieur des détecteurs de traces. Les premiers détecteurs de trace étaient des chambres à brouillard et des chambres à bulles dont on prenait des photos qu'il fallait numériser ensuite sur des tables de projection. Avec la chambre à fils, la numérisation directe des données est devenue possible. Aujourd'hui, les détecteurs de traces de type chambre à dérive sont couramment utilisés pour détecter la trace de particules chargées sur des grandes surfaces. Ces détecteurs gazeux procurent une résolution spatiale inférieure à 150 $\mu$m pour un faible nombre de voies de mesure mais ils sont volumineux et ils nécessitent des enveloppes pour contenir le gaz et des tuyaux pour renouveler le gaz. Les détecteurs de traces en silicium n'ont pas ces inconvénients et permettent d'atteindre des résolutions de quelques dizaines de microns. Toutefois, les détecteurs en silicium à pistes, a fortiori à pixels, nécessitent un très grand nombre de voies de mesure, une par piste ou par pixel, et la consommation du système peut devenir prohibitive. Par ailleurs, ces détecteurs en silicium sont relativement coûteux. Un détecteur de traces de particules ionisantes est aussi connu de DE 195 05 729 C1. Ce document décrit un détecteur avec un scintillateur et un imageur en silicium, le détecteur comprenant aussi un réseau de microlentilles attaché directement au scintillateur ou à l'imageur.

## EXPOSE DE L'INVENTION

L'invention vise à remédier aux inconvénients de l'état de la technique en proposant un détecteur de traces de particules dans un scintillateur dont la consommation électrique et le coût restent raisonnables, sans sacrifier la résolution spatiale.

Un autre objet de l'invention est de proposer un détecteur de traces de particules qui permette de réaliser une image en trois dimensions d'une trace de particule ionisante.

Enfin un autre objet de l'invention est de proposer une caméra gamma beaucoup plus sensible que celles de l'art antérieur.

Pour ce faire, l'invention propose d'utiliser un réseau de microlentilles pour réaliser une image de la trace scintillante. Chaque microlentille du réseau de microlentilles projette, sur un imageur, l'image de la trace des particules ionisantes. Ainsi, selon l'invention, l'information sur la trace dans le scintillateur n'est plus transmise de manière électrique, mais de manière optique grâce aux microlentilles qui focalisent les photons émis par la trace scintillante sur l'imageur.

Plus précisément, l'invention propose, selon un premier aspect, un détecteur de traces de particules ionisantes comportant :

- Un scintillateur apte à émettre des photons lorsqu'il est traversé par les particules ionisantes;

- Un premier imageur apte à détecter chaque photon émis par le scintillateur ;

- Un premier réseau de microlentilles, chaque microlentille du premier réseau de microlentilles étant agencée pour former une image de la trace des particules ionisantes en focalisant les photons émis dans le scintillateur, sur le premier imageur.

Le fait d'utiliser un réseau de microlentilles permet de détecter des particules ionisantes même lorsqu'elles créent une faible quantité de photons dans le scintillateur. En outre, grâce à l'utilisation des microlentilles, la résolution spatiale du détecteur est limitée uniquement par les caractéristiques optiques des microlentilles et par la résolution spatiale de l'imageur. En outre, l'utilisation d'un réseau de microlentilles permet d'avoir une très bonne profondeur de champ, de sorte que l'image peut être nette quelle que soit la position de la zone scintillante, c'est-à-dire de la zone du scintillateur dans laquelle les photons sont émis. De plus, le fait d'utiliser un réseau de microlentilles permet de réaliser une image stéréoscopique de la trace créée dans le scintillateur. Cette information en trois dimensions permet d'utiliser un masque codé disposé entre la source de particules et le scintillateur en lieu et place d'un collimateur de façon à augmenter l'efficacité de détection d'une caméra gamma.

Le détecteur de particules peut également comporter une ou plusieurs des caractéristiques ci-après prises individuellement ou selon toutes les combinaisons techniquement possibles :

- le premier imageur comporte une pluralité de détecteurs élémentaires, chaque microlentille du premier réseau de microlentilles étant optiquement couplée à au moins deux détecteurs élémentaires du premier imageur ;

- chaque microlentille du premier réseau de microlentilles présente une distance focale, la distance D entre le premier réseau de microlentilles et le premier imageur étant strictement supérieure à la distance focale des microlentilles ;

- le premier imageur présente une résolution spatiale meilleure que 1 mm et avantageusement meilleure que 200 $\mu$m, de façon à pouvoir localiser précisément une particule ionisante;

- le premier imageur doit être de préférence suffisamment sensible de façon à pouvoir détecter et localiser chaque photon dans le scintillateur c'est-à-dire que le signal produit par chaque photon doit être supérieur au bruit ;

- le premier imageur peut être formé d'un CMOS ou d'un CCD (charge coupled device) ;

- le premier imageur comporte de préférence une matrice formée de plusieurs détecteurs élémentaires, ou pixels, chaque détecteur élémentaire étant apte à créer des charges lorsqu'il reçoit un photon ;

- chaque détecteur élémentaire présente de préférence des dimensions inférieures ou égales à 1 mm, et de manière plus préférentielle inférieures ou égales à 200 $\mu$m, de façon à former un imageur présentant une très bonne résolution spatiale ;

- chaque détecteur élémentaire est de préférence un photomultiplicateur, avantageusement une photodiode à avalanche. Chaque photodiode à avalanche fonctionne de préférence en mode saturé ou mode Geiger, de sorte que chaque photodiode à avalanche forme un pixel indiquant la présence ou l'absence de photon reçu dans la zone de l'espace qu'il représente. Un tel imageur permet d'avoir une très bonne résolution spatiale tout en ayant une très bonne sensibilité et en étant très rapide ;

- le premier imageur comporte également de préférence un système de lecture digitale apte à identifier quel détecteur élémentaire a reçu un photon ;

- Le détecteur de traces de particules comporte de préférence des moyens de calcul aptes à calculer la position tridimensionnelle de la zone scintillante dans le scintillateur à partir des images du scintillateur projetées sur le premier imageur par les microlentilles. En effet, chaque microlentille projette une image différente du scintillateur sur le premier imageur. En comparant les images projetées par plusieurs lentilles différentes, on peut donc reconstituer une image en trois dimensions du scintillateur avec une très bonne résolution spatiale ;

- Le scintillateur présente de préférence une forme parallélépipèdique comportant :

  - une face principale de détection s'étendant suivant un plan de référence (x,y) ;

  - une face secondaire de détection s'étendant perpendiculaire au plan de référence (x,y) ;

- le premier réseau de microlentilles et le premier imageur s'étendent de préférence parallèlement à la face principale de détection, de façon à avoir une très bonne résolution spatiale en (x,y) quelle que soit la profondeur z à laquelle on se trouve dans le scintillateur ;

- le détecteur comporte en outre de préférence :

o Un deuxième imageur apte à détecter chaque photon en provenance du scintillateur ;

∘ Un deuxième réseau de microlentilles, chaque microlentille du deuxième réseau étant agencée pour former une image de la trace des particules en focalisant les photons émis dans le scintillateur sur le deuxième imageur ;

- Le deuxième réseau de microlentilles et le deuxième imageur s'étendent de préférence parallèlement à la face secondaire de détection du scintillateur de façon à augmenter la résolution spatiale du détecteur suivant la direction perpendiculaire au plan de référence ;

- Chaque réseau de microlentille présente de préférence une maille carrée ;

- Chaque microlentille présente de préférence des dimensions comprises entre 0.5 et 5 mm ;

- Chaque microlentille présente de préférence une ouverture numérique comprise entre 0.2 et 0.3, de façon à ne pas limiter la quantité de photons qui seront focalisés dans les bonnes conditions.

Le détecteur de traces de particules ionisantes selon l'invention permet notamment de visualiser des traces de particules chargées telles que des particules α, des ions, des protons, des électrons résultant éventuellement d'une interaction de photons énergétiques tels que les photons X ou gamma. En effet, on peut ainsi réaliser par stéréoscopie des images en trois dimensions des traces des particules ionisantes dans le scintillateur sans avoir recours à un grand nombre de voies de mesure.

Selon un autre mode de réalisation, le détecteur de traces de particules peut être une caméra gamma. Une telle caméra gamma présente alors une très grande sensibilité, environ 100 fois meilleure que les caméras gamma de l'art antérieur, et une bonne résolution spatiale.

Dans le cas où le détecteur de traces de particules est une caméra gamma, le détecteur de traces de particules comporte de préférence un masque codé disposé entre la source de photons gamma et le scintillateur. C'est l'utilisation du réseau de microlentilles qui permet l'utilisation du masque codé à courte distance de la source (par exemple inférieure à 1 m), ce qui permet lui-même d'augmenter considérablement le nombre de photons gamma arrivant sur le scintillateur et d'augmenter ainsi la sensibilité de la caméra.

## BREVES DESCRIPTION DES FIGURES

D'autres caractéristiques et avantages de l'invention ressortiront à la lecture de la description détaillée qui suit, en référence aux figures annexées, qui illustrent :

- La figure 1, une représentation schématique d'un détecteur de traces de particules selon un premier mode de réalisation de l'invention ;
- La figure 2, une représentation schématique d'un détecteur de traces de particules selon un deuxième mode de réalisation de l'invention ;
- La figure 3, une représentation schématique d'une caméra gamma selon un troisième mode de réalisation de l'invention.

Pour plus de clarté, les éléments identiques ou similaires sont repérés par des signes de références identiques sur l'ensemble des figures.

## DESCRIPTION DETAILLEE D'AU MOINS UN MODE DE REALISATION

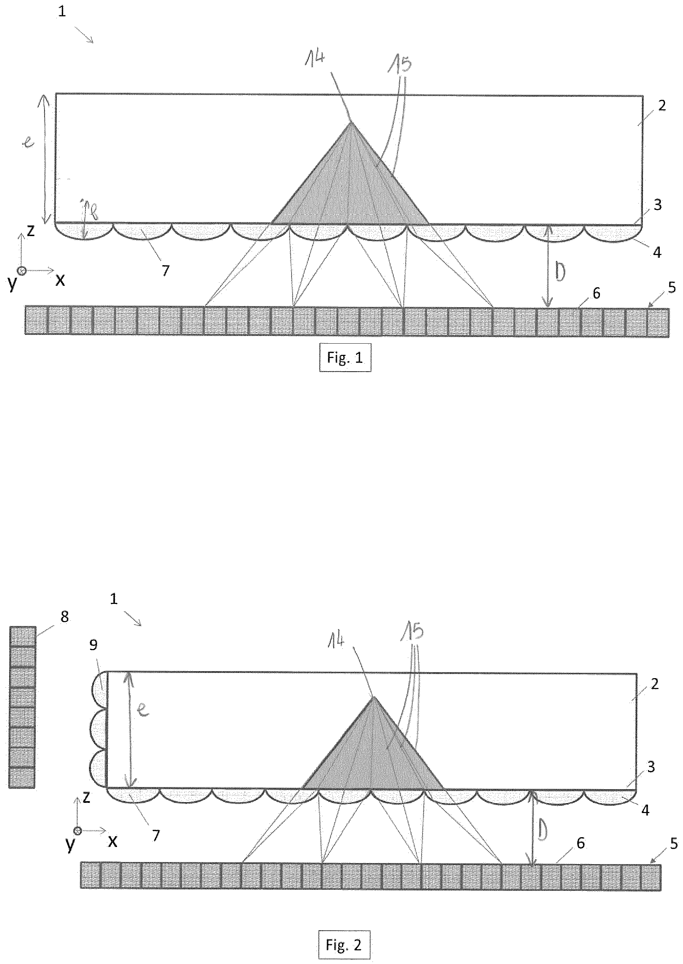

La figure 1 représente un détecteur 1 de traces de particules ionisantes selon un premier mode de réalisation de l'invention. Dans ce premier mode de réalisation, le détecteur 1 est un détecteur de traces permettant de visualiser la trace scintillante générée par le passage d'une particule ionisante dans le scintillateur. On comprendra ici par « particule ionisante » une particule chargée comme un proton, un ion, ou un électron, résultant éventuellement de l'interaction d'un photon énergétique comme les photons X ou gamma.

Le détecteur de traces de particules ionisantes 1 comporte un scintillateur 2. Le scintillateur 2 est un milieu scintillant, c'est-à-dire qu'il est formé par un matériau apte à émettre des photons, en général de fluorescence, lorsqu'il est traversé par les particules ionisantes que l'on veut suivre. Ainsi, d'une façon générale, une particule ionisante produit au moins une interaction 14 dans le matériau scintillateur 2. Cette interaction libère une grande quantité de photons, dits photons de scintillation 15, ces derniers étant détectés par un imageur 5 optiquement couplé au scintillateur 2. Une particule ionisante peut interagir à de multiples reprises dans le scintillateur. Bien que ces interactions se produisent successivement dans le temps, leur décalage temporel est si faible qu'elles peuvent être considérées comme simultanées. Ainsi, une particule ionisante détectée par le détecteur 1 produit au moins une ou plusieurs interactions 14 dans le détecteur. L'ensemble des lieux d'interaction dans le détecteur constitue la trace de la particule dans le détecteur. La trace peut être ponctuelle (un seul point d'interaction) ou avoir la forme d'une ligne droite ou d'une courbe erratique, reliant les différents points d'interaction.

Le matériau choisi pour le scintillateur 2 doit être le plus scintillant possible, c'est-à-dire produire le plus grand nombre possible de photons par unité d'énergie perdue, c'est-à-dire de préférence au moins 5 photons par keV. Le matériau scintillant est de préférence très transparent à la lumière qu'il produit et sans enveloppe.

Selon différents modes de réalisation et en fonction des particules que l'on veut détecter, différents matériaux scintillants peuvent être choisis. En effet, le matériau scintillant choisi dépend du type de particule à détecter, des paramètres à mesurer, de la précision requise, du flux de particules à détecter, ou encore de l'environnement.

Selon un mode de réalisation préférentiel, le matériau scintillant choisi est un scintillateur plastique. En effet, les scintillateurs plastiques présentent l'avantage d'être non-hygroscopiques, de sorte qu'ils ne nécessitent pas d'enveloppe pour les contenir, toute enveloppe étant susceptible de dévier les particules chargées. En outre, les matériaux scintillants plastiques peuvent être réalisés en très grands volumes, ce qui permet de réaliser des dispositifs de grandes dimensions. De plus, les scintillateurs plastiques sont très transparents à la lumière qu'ils produisent. Enfin, ils produisent de l'ordre de 10 photons par keV d'énergie déposée dans une trace. Pour les caméras gamma, on préférera des cristaux scintillants (matériaux inorganiques) comme du NaI ou du $LaBr_3$.

Le scintillateur présente de préférence une forme de parallélépipède, mais d'autres formes sont envisageables comme l'icosaèdre car plus il y aura de faces, moins il y aura de contraintes sur l'ouverture numérique des microlentilles. Le scintillateur comporte de préférence une face principale de détection 3 qui s'étend suivant un plan de référence (x, y) définissant des directions x et y. La direction z est définie comme étant perpendiculaire au plan de référence (x, y).

Le détecteur à particules 1 comporte également un imageur 5. L'imageur 5 est apte à détecter chaque photon émis par le scintillateur 2. Pour cela, l'imageur doit présenter une résolution spatiale inférieure à 1 mm, avantageusement inférieure à 200 $\mu$m. En outre, pour éviter la superposition des traces, le temps de lecture de l'imageur doit être très inférieur au temps moyen entre deux particules successives. Ce temps moyen dépend des dimensions du détecteur et du flux de particules. Pour un flux de 100 particules par seconde, un temps de lecture de l'ordre de la milliseconde est nécessaire. Pour un flux 1000 fois plus élevé, le temps de lecture sera de l'ordre de la microseconde. L'imageur 5 comporte de préférence une matrice de détecteurs élémentaires 6, chaque détecteur élémentaire 6 étant apte à émettre un courant s'il reçoit un photon. Chaque détecteur élémentaire 6 présente de préférence des dimensions inférieures ou égales à 50 $\mu$m. Chaque détecteur élémentaire forme ainsi un pixel. En outre, l'imageur comporte un système de lecture digitale des détecteurs élémentaires permettant d'identifier quel détecteur élémentaire a reçu un photon.

Chaque détecteur élémentaire (ou pixel) est de préférence un photomultiplicateur comme par exemple une photodiode à avalanche ou photomultiplicateur silicium SiPM. Dans ce cas, l'imageur 5 est donc formé par une matrice de photomultiplicateurs. Dans le cas des photodiodes à avalanche, on applique aux bornes de chacune d'elle une tension telle que la photodiode à avalanche fonctionne en mode saturé ou mode Geiger. En outre, chaque photodiode à avalanche 6 présente de préférence des dimensions inférieures ou égales à 50 $\mu$m, de sorte que chaque photodiode à avalanche forme un pixel. Ainsi, si l'une des photodiodes à avalanche reçoit un photon, elle génère une impulsion qui permet d'identifier le pixel correspondant dans l'image digitale. Ainsi, l'imageur permet de savoir dans quelle zone de l'espace arrive un photon unique avec une très bonne résolution spatiale. En outre, les photodiodes à avalanche présentent l'avantage d'être très rapides, c'est-à-dire d'avoir un temps de réaction de l'ordre de la nanoseconde et de très peu consommer de puissance électrique. L'imageur 5 ainsi formé s'étend suivant un plan parallèle au plan de référence (x, y).

Selon un autre mode de réalisation, l'imageur 5 peut aussi être constitué d'un CMOS ou d'un CCD.

Le détecteur de particules comporte également un premier réseau de microlentilles 4. Chaque microlentille 7 est agencée pour focaliser les photons émis dans le scintillateur dans le plan de l'imageur 5 et ce, avec une très bonne résolution spatiale quelle que soit la profondeur z à laquelle ces photons sont émis dans le scintillateur. On optimise la résolution spatiale en plaçant l'imageur à proximité du plan focal des microlentilles, l'écart à la position focale étant optimisé en fonction de la profondeur du scintillateur.

Le fait de placer l'imageur à la distance focale des microlentilles conduirait à focaliser les photons visibles dont l'angle d'incidence est normal au plan supportant les microlentilles 7. Cela conduit à une mise au point dite « à l'infini », permettant de réaliser une image nette des traces générées à grande distance des microlentilles, distance considérée comme infinie par rapport aux dimensions des lentilles.

Cependant, l'objectif du dispositif des figures 1 à 3 est d'imager des lieux d'interactions 14 dans le scintillateur 2, ce dernier ayant une épaisseur e de l'ordre du centimètre, comprise par exemple entre 0.5 et 2 cm, par exemple égale 1 cm. Autrement dit, chaque microlentille 7 est configurée pour former, sur les photodétecteurs élémentaires 6, une image nette d'une interaction 14 dans le scintillateur 2, cette interaction 14 produisant des photons de scintillation 15. On comprend que cette interaction 14 se produit à une distance inférieure à l'épaisseur e du scintillateur 2. Il est impossible de former une image d'une source située à une distance d'une lentille inférieure à la distance focale f. Aussi, chaque microlentille 7 a de préférence une distance focale faible, inférieure à 0.5 cm, et par exemple égale à 0.1 cm, de façon à pouvoir réaliser des images suffisamment nettes d'interactions se produisant en profondeur dans le scintillateur 2, c'est-à-dire à proximité du réseau de lentilles 4.

Par ailleurs, on détermine une distance e', par rapport à la microlentille 7, à laquelle les objets observés, en l'occurrence les interactions 14 générant les photons visibles, doivent être nets. Dans l'exemple représenté sur les figures 1 à 3, les microlentilles 7 étant accolées au scintillateur 2, la distance e' est naturellement inférieure ou égale à l'épaisseur e du scintillateur, et supérieure à la focale des microlentilles.

Connaissant f et e', il est possible de déterminer la distance D entre le plan du premier réseau de microlentilles 4 et la matrice de photodétecteurs 6, selon l'expression :

$$D = f + \frac{f^2}{e' - f}$$

En prenant f = 0.1 cm et e' = 1 cm, e' = 0.5 cm, e' = 0.2 cm, nous obtenons respectivement D = 0.11 cm, D = 0.125 cm et D = 0.2 cm, soit 2f.

Ainsi, d'une façon générale, la distance D entre le premier réseau de microlentilles 4 et l'imageur 5 est strictement supérieure à la distance focale des microlentilles. Ainsi, D > f, et de préférence, $f < D \leq 2f$, en particulier $1.1\,f \leq D \leq 2f$. Plus D s'éloigne de f, plus la zone de netteté dans le scintillateur 2 se rapproche du réseau de microlentilles 6. Inversement, plus D se rapproche de f, plus la zone de netteté dans le scintillateur s'éloigne du réseau de microlentilles, et se rapproche de la face supérieure 18 du scintillateur 2, cette face supérieure désignant la face du scintillateur 2 exposée au rayonnement incident.

Cette distance D peut être adaptée, selon qu'on souhaite disposer d'une image plus nette des interactions 14 produites dans la partie supérieure du scintillateur, c'est-à-dire à proximité de la face supérieure 18, ou dans la partie inférieure du scintillateur c'est-à-dire à proximité de la face de détection 3.

Chaque microlentille est optiquement couplée à une pluralité de pixels 6 constituant l'imageur matriciel 5. Typiquement, chaque lentille est optiquement couplée à un groupe de n * n pixels, avec n > 1. De préférence, n est compris entre 10 et 100. Il y a donc moins de microlentilles 7 que de pixels 6. Typiquement, le nombre de pixels 6 est supérieur à 10fois, voire 100 fois, voire 1000 fois (ou plus encore) le nombre de microlentilles 7.

Lorsqu'une interaction 14 se produit dans le scintillateur 2, les photons de scintillation 15 sont générés, et une partie d'entre eux atteint un groupe de m microlentilles. Dans l'exemple des figures 1 à 3, on a représenté un groupe de 4 * 4 microlentilles 7 « touchées » par les photons de scintillation. Ces microlentilles touchées sont celles qu'atteignent les photons dont l'angle d'incidence, par rapport à la normale à face 3 est inférieur à un angle limite de réfraction $\Box\theta_{lim}$. Chaque microlentille 7 est couplée à un groupe de pixels 6 distinct. Aussi, selon cette configuration, 16 images de l'interaction 14 sont obtenues, chaque image correspondant à un groupe de pixels 6, chaque groupe de pixel étant associé à une microlentille distincte.

D'une façon générale, le dispositif permet d'obtenir une pluralité d'images d'une trace formée par une ou plusieurs interactions 14 dans le scintillateur 2. Il y a autant d'images que de lentilles collectant une quantité suffisante de photons de scintillation 15. Autrement dit, avec un tel dispositif, les photons de scintillation 15 atteignent m lentilles, permettant alors de former m images distinctes sur l'imageur. Cela permet d'obtenir une image à 3 dimensions de la trace dans le scintillateur 2, du fait que plusieurs images, correspondant à la même trace, sont formées (stéréoscopie). La précision de la localisation spatiale de la trace dépend de la distance de l'interaction au plan des microlentilles e', de la focale des microlentilles 7, de la distance entre le plan des microlentilles 4 et le plan imageur 5 et de la dimension des pixels 6. Pour un système optimisé, elle est typiquement de l'ordre de la dimension des pixels 6.

Chaque microlentille est dimensionnée de façon à former une image d'une trace scintillante générée dans le scintillateur avec une résolution spatiale R donnée suivant les directions x et y, et ce quelle que soit la profondeur z à laquelle la trace est formée dans le scintillateur. Pour cela, pour un scintillateur de profondeur p (en centimètre), chaque microlentille du premier réseau présente de préférence un diamètre de l'ordre de $4.10^{-2}p^{1/2}$ et une ouverture numérique $\alpha$, avec $0.2 \leq \alpha \leq 0.3$.

Par ailleurs, si la maille du réseau est carrée, chaque microlentille présente de préférence une forme carrée de façon à minimiser les zones non couvertes par les microlentilles.

Le premier réseau de microlentilles est de préférence disposé sur la face principale 3 du scintillateur. Le premier réseau de microlentilles recouvre de préférence l'ensemble de la face principale 3 du scintillateur.

Les microlentilles donnent une multitude de points de vue sur les traces scintillantes générées dans le scintillateur de sorte qu'il est possible de reconstituer une image 3D de ces traces en comparant les images formées par chacune des microlentilles dans le plan de l'imageur, le pas du réseau des images projetées étant lié à la distance entre la trace et le plan des microlentilles. En effet, en comparant la différence d'angle sous laquelle chaque lentille du premier réseau de microlentilles projette la trace, on peut calculer une image en trois dimensions des traces générées (stéréoscopie).

Le détecteur de particules ainsi formé permet donc d'avoir une très bonne résolution spatiale en x et en y, sur toute la profondeur du scintillateur. Toutefois, un tel détecteur présente une moins bonne résolution spatiale suivant la direction z que suivant les directions x et y.

Pour améliorer la résolution spatiale du détecteur suivant la direction z, le détecteur à particules peut également comporter, comme représenté sur la figure 2, un deuxième imageur 8 disposé parallèlement à la direction z et un deuxième réseau de microlentilles 9 disposé entre le deuxième imageur 8 et le scintillateur 2. Chaque lentille du deuxième réseau de microlentilles 9 est agencée de façon à former une image des traces scintillantes dans le scintillateur dans le plan du deuxième imageur 8.

Selon un mode de réalisation, le deuxième imageur 8 peut être identique au premier imageur, à l'exception du fait qu'il est disposé parallèlement à un plan (y, z) au lieu d'être disposé parallèlement à un plan (x, y). De même, selon un mode de réalisation, le deuxième réseau de microlentilles peut être identique au premier réseau de microlentilles, à l'exception du fait qu'il est disposé parallèlement à un plan (y, z) au lieu d'être disposé parallèlement à un plan (x, y).

Toutefois, on peut également envisager de dimensionner le deuxième réseau de microlentilles et le deuxième imageur différemment du premier réseau de microlentilles et du premier imageur de façon à obtenir une résolution spatiale différente suivant la direction z de celles qu'on obtient suivant les directions x et y. Afin d'augmenter encore la résolution spatiale et la sensibilité, si le scintillateur comporte n faces, le détecteur peut comporter n réseaux de microlentilles, chaque réseau de microlentilles étant positionné sur une des faces du scintillateur. Dans ce cas, le détecteur comporte également autant d'imageurs qu'il a de réseaux de microlentilles, de façon à ce que chaque réseau de microlentille focalise les photons émis dans le scintillateur dans le plan l'imageur associé.

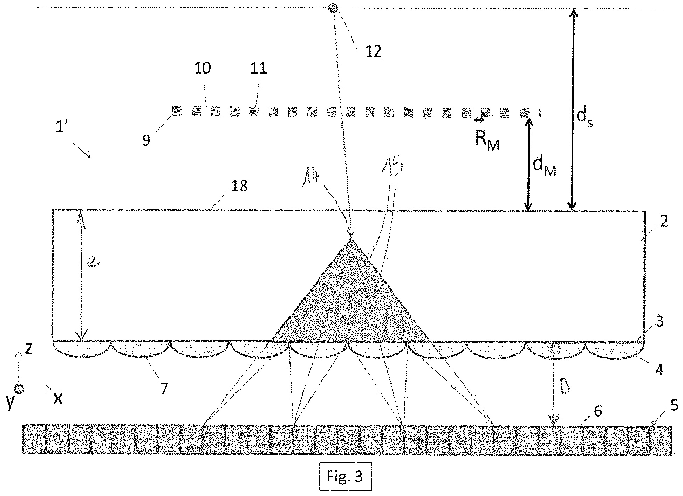

La figure 3 représente un détecteur 1' de particules selon un autre mode de réalisation de l'invention. Dans ce mode de réalisation, le détecteur de particules 1' est une caméra gamma.

Cette caméra gamma comporte, comme dans les modes de réalisation précédents :

- Un scintillateur 2 ;
- Un réseau de microlentilles 4 ;
- Un imageur 5.

Le scintillateur peut par exemple être un scintillateur solide en iodure de sodium ou en bromure de lanthane. Le scintillateur 2 comporte une première face principale 3 opposée à une deuxième face principale 18. La deuxième face principale 18 du scintillateur est disposée en face de la source de particules gamma. La première face principale 3 est recouverte par le réseau de microlentilles 4.

Le réseau de microlentilles 4 et l'imageur 5 sont identiques à ceux décrits dans les modes de réalisation précédents.

L'utilisation d'un réseau de microlentilles 4 est particulièrement avantageux dans le cas d'une caméra gamma car il permet l'utilisation d'un masque codé 9, en particulier dans une utilisation médicale, où la distance source/scintillateur est du même ordre de grandeur que la dimension du scintillateur. En effet, seule l'information à trois dimensions permet la reconstruction correcte de l'image du masque. Le masque codé 9 permet d'augmenter l'efficacité de la caméra gamma sans dégrader la résolution spatiale.

Le masque codé 9 est formé par exemple par une plaque 11 percée par des trous 10.

Pour plus de commodité dans les explications, on introduira la notion d'efficacité $\varepsilon_M$ du masque codé. Celle-ci résulte de trois paramètres: la capacité de la caméra gamma à échantillonner l'image projetée à travers le masque $\varepsilon_e$, l'absorption linéique $\mu$ de la partie absorbante du masque et la transmission des trous du masque définie par le rapport entre le nombre de photons, $N_d$, arrivant sur le détecteur et ceux, $N_i$, arrivant sur les trous du masque:

$$\varepsilon_M = \varepsilon_e(1 - e^{-\mu x})\frac{N_d}{N_i} \text{ où x est l'épaisseur du masque.}$$

Le matériau utilisé pour réaliser le masque et son épaisseur jouent au premier ordre sur cette efficacité.

DIMENSION DES TROUS DU MASQUE : $R_M$

La capacité d'imagerie d'un système à masque codé repose sur un échantillonnage de l'image projetée par le masque. Pour une bonne efficacité d'échantillonnage, la dimension de l'image d'un trou du masque projetée sur le détecteur doit être sensiblement plus grande que la résolution spatiale du détecteur. En pratique on utilise une taille d'image de trou deux à trois fois plus grande que la résolution du détecteur ($\varepsilon_e \sim 0.8\text{-}0.9$). Ainsi, pour une résolution de 200 microns au niveau du scintillateur, des images de trou de 500 microns conviendraient.

MATERIAU

Le masque est de préférence absorbant et mince pour éviter un effet de collimation qui réduirait l'efficacité du masque. On choisira donc de préférence le matériau dont l'absorption linéique est la plus élevée. Ainsi, selon un mode de réalisation préférentiel, le masque codé est réalisé dans une plaque 11 de tungstène. En effet, ce matériau offre une très bonne tenue mécanique et autorise un usinage très fin.

EPAISSEUR

Si x est l'épaisseur de la plaque 11, l'angle limite est $\theta = \text{Arctg}(R_M/x)$. On peut définir la surface codée comme la surface des trous qui se projettent sur le détecteur : $fc = (R_M(d_s - d_M)/x)^2/4$, avec $d_s$ qui est la distance entre la source de photons gamma et le scintillateur et $d_M$ qui est la distance entre le masque et le scintillateur ; celle-ci doit être suffisante pour que l'on puisse former une image. Le nombre de pixels de l'image reconstruite est proportionnel à cette surface codée. Il faut donc que $\theta$ soit le plus grand possible, donc $R_M/x$ doit être le plus grand possible.

Toutefois, un masque épais offre une bonne opacité mais peut réduire la transmission des trous. Lorsque la plaque 11 est en tungstène, une épaisseur e de 5 mm offre un bon compromis puisque le masque codé absorbe ainsi les ¾ des photons de 141 keV et que la transmission ne s'annulera qu'à 45°.

DISTANCE MASQUE-DETECTEUR-SOURCE

La distance $d_s$ entre la source 12 et le scintillateur 2 doit être la plus faible possible pour maximiser l'efficacité du masque codé. Par ailleurs, plus la distance $d_M$ masque-scintillateur est grande, meilleure est la résolution au niveau de la source, mais plus la distance source-masque est grande, meilleure est la transmission des trous et plus grande est la surface codée. On peut donc optimiser ces distances en fonction des qualités d'imagerie recherchées (champ, résolution).

EXEMPLES DE REALISATION

L'optimisation fine d'une telle caméra gamma doit être effectuée en fonction de l'application mais pour fixer les idées il peut être utile de donner quelques valeurs. Considérons une distance $d_s$ de 20 cm entre la source de photons gamma et le scintillateur et plaçons à mi-distance entre la source et le scintillateur, un masque codé en tungstène de 5 mm d'épaisseur percé de trous de 5 mm de côté sur la moitié de la surface.

EFFICACITE :

Environ 15 à 20% des photons tombant sur le masque le traverse ($N_i/N_d \sim 0.15$-$0.2$), l'absorption du masque est de 0.75 et l'efficacité d'échantillonnage est d'environ 0.9. L'efficacité du masque est donc de l'ordre de 10 à 13%. Pour comparaison, l'efficacité d'un collimateur d'une caméra médicale classique n'excède pas 0.1%. Ce gain de plus de deux ordres de grandeur en efficacité se traduit par une réduction du même ordre de la dose de produit radioactif injectée au patient.

RESOLUTION :

La résolution au niveau de la source est d'un millimètre soit 5 à 6 fois meilleure que celle d'une caméra médicale classique.

Naturellement l'invention n'est pas limitée aux modes de réalisation décrits en référence aux figures et des variantes peuvent être envisagées sans sortir du cadre de l'invention. Ainsi, en fonction des particules à détecter, d'autres types de matériau scintillant peuvent être choisis pour réaliser le scintillateur. Par ailleurs, le choix de l'imageur dépend du choix du scintillateur et peut donc également varier en fonction des particules à détecter notamment.

## Revendications

1. Détecteur (1) de traces de particules ionisantes comportant :

   - Un scintillateur (2) apte à émettre des photons lorsqu'il est traversé par les particules ionisantes;
   - Un premier imageur (5) apte à détecter chaque photon émis par le scintillateur, le premier imageur comportant une pluralité de détecteurs élémentaires ; un premier réseau de microlentilles (4), chaque microlentille (7) du premier réseau de microlentilles étant agencée pour former une image de la trace des particules en focalisant les photons émis dans le scintillateur sur le premier imageur, le premier imageur et le premier réseau de microlentilles étant espacés d'une distance D, chaque microlentille du premier réseau de microlentilles étant optiquement couplée à au moins deux détecteurs élémentaires du premier imageur, **caractérisé en ce que** chaque microlentille présente une distance focale strictement inférieure à la distance D entre le premier réseau de microlentilles et le premier imageur.

2. Détecteur (1) de traces selon la revendication 1, dans lequel le premier imageur est un CMOS ou un CCD.

3. Détecteur (1) de traces selon la revendication 1, dans lequel le premier imageur (5) comporte de préférence une matrice formée de plusieurs détecteurs élémentaires (6), chaque détecteur élémentaire (6) étant apte à créer une charge lorsqu'il reçoit un photon, chaque détecteur élémentaire (6) présentant des dimensions inférieures ou égales à 1 mm, avantageusement à 200 $\mu$m.

4. Détecteur de traces selon la revendication précédente, dans lequel chaque détecteur élémentaire est un photomultiplicateur, avantageusement une photodiode à avalanche.

5. Détecteur (1) à scintillation selon l'une des revendications 3 ou 4, dans lequel le premier imageur (5) comporte également un système de lecture digitale apte à identifier quel détecteur élémentaire a reçu un photon.

6. Détecteur (1) de traces selon l'une des revendications précédentes, comportant en outre des moyens de calcul aptes à calculer la position du lieu d'émission de chaque photon émis dans le scintillateur à partir des images projetées sur le premier imageur par les microlentilles.

**7.** Détecteur de traces selon l'une des revendications précédentes, comportant en outre :

> - Un deuxième imageur (8) apte à détecter chaque photon émis par le scintillateur ;
> - Un deuxième réseau de microlentilles (9), chaque microlentille du deuxième réseau étant agencée pour former une image de la trace des particules en focalisant les photons émis dans le scintillateur sur le deuxième imageur,
>
> le deuxième réseau de microlentilles et le deuxième imageur s'étendant perpendiculairement au premier réseau de microlentilles.

**8.** Détecteur de traces selon l'une des revendications précédentes, dans lequel chaque microlentille présente des dimensions comprises entre 0.5 et 5 mm.

**9.** Détecteur de traces selon l'une des revendications précédentes, dans lequel chaque microlentille présente une ouverture numérique comprise entre 0.2 et 0.3.

**10.** Caméra gamma (1') comportant un détecteur de traces selon l'une des revendications précédentes.

**11.** Caméra gamma selon la revendication précédente, comportant en outre un masque codé (9).


**Patentansprüche**

**1.** Detektor (1) für ionisierende Partikelspuren, umfassend:

> - einen Szintillator (2), der geeignet ist, Photonen auszugeben, wenn er durch ionisierende Partikel durchquert wird;
> - einen ersten Bildgeber (5), der geeignet ist, jedes vom Szintillator ausgegebene Photon zu erfassen, wobei der erste Bildgeber eine Vielzahl von elementaren Detektoren umfasst
> - ein erstes Mikrolinsennetz (4), wobei jede Mikrolinse (7) des ersten Mikrolinsennetzes angeordnet ist, um ein Bild der Spur der Partikel durch Fokussieren der in dem Szintillator ausgegebenen Photonen auf dem ersten Bildgeber zu bilden, wobei der erste Bildgeber und das erste Mikrolinsennetz um eine Entfernung D beabstandet sind, wobei jede Mikrolinse des ersten Mikrolinsennetzes optisch an wenigstens zwei elementare Detektoren des ersten Bildgebers gekoppelt ist,
>
> **dadurch gekennzeichnet, dass** jede Mikrolinse eine fokale Entfernung aufweist, die strikt unter der Entfernung D zwischen dem ersten Mikrolinsennetz und dem ersten Bildgeber liegt.

**2.** Detektor (1) für Spuren gemäß Anspruch 1, bei dem der erste Bildgeber ein CMOS oder ein CCD ist.

**3.** Detektor (1) für Spuren gemäß Anspruch 1, bei dem der erste Bildgeber (5) bevorzugt eine Matrix aufweist, die aus mehreren elementaren Detektoren (6) geformt wird, wobei jeder elementare Detektor (6) geeignet ist, eine Last zu bilden, wenn er ein Photon empfängt, wobei jeder elementare Detektor (6) Dimensionen aufweist, die kleiner als oder gleich 1 mm, vorteilhaft 200 $\mu$m sind.

**4.** Detektor für Spuren gemäß dem voranstehenden Anspruch, bei dem jeder elementare Detektor ein Fotomultiplikator, vorteilhaft eine Lawinenphotodiode ist.

**5.** Detektor (1) mit Szintillation gemäß einem der Ansprüche 3 oder 4 ist, bei dem der erste Bildgeber (5) ebenfalls ein digitales Lesesystem umfasst, das geeignet ist zu identifizieren, welcher elementare Detektor ein Photon empfangen hat.

**6.** Detektor (1) für Spuren gemäß einem der voranstehenden Ansprüche, umfassend darüber hinaus Berechnungsmittel, die geeignet sind, die Position des Sendeortes jedes in dem Szintillator ausgegebenen Photons ausgehend von durch die Mikrolinsen auf den ersten Bildgeber projizierten Bildern zu berechnen.

**7.** Detektor für Spuren gemäß einem der voranstehenden Ansprüche, umfassend darüber hinaus:

> - einen zweiten Bildgeber (8), der geeignet ist, jedes vom Szintillator ausgegebene Photon zu erfassen;
> - ein zweites Mikrolinsennetz (9), wobei jede Mikrolinse des zweiten Netzes angeordnet ist, um ein Bild der Spur der Partikel durch Fokussieren der im Szintillator ausgegebenen Photonen auf dem zweiten Bildgeber zu bilden
> - wobei sich das zweite Mikrolinsennetz und der zweite Bildgeber lotrecht zum ersten Mikrolinsennetz erstrecken.

**8.** Detektor für Spuren gemäß einem der voranstehenden Ansprüche, bei dem jede Mikrolinse zwischen 0,5 und 5 mm inbegriffene Abmessungen aufweist.

**9.** Detektor für Spuren gemäß irgendeinem der voranstehenden Ansprüche, bei dem jede Mikrolinse eine zwischen 0,2 und 0,3 inbegriffene digitale Öffnung aufweist.

**10.** Gammakamera (1'), umfassend einen Detektor für Spuren gemäß einem der voranstehenden Ansprüche.

11. Gammakamera gemäß dem voranstehenden Anspruch, umfassend darüber hinaus eine kodierte Maske (9).

**Claims**

1. A ionizing particles trace detector (1) for including:

   - a scintillator (2) able to emit photons when the ionizing particles pass therethrough;
   - a first imager (5) able to detect each photon emitted by the scintillator, the first imager including a plurality of unit detectors;

   a first array of micro lenses (4), each micro lens (7) of the first array of micro lenses being arranged to form an image of the trace of the particles by focusing the photons emitted in the scintillator onto the first imager, the first imager and the first array of micro lenses being spaced apart by a distance D, each micro lens of the first array of micro lenses being optically coupled to at least two unit detectors of the first imager, **characterized in that** each micro lens has a focal distance strictly lower than the distance D between the first array of micro lenses and the first imager.

2. The trace detector (1) according to claim 1, wherein the first imager is a CMOS or a CCD.

3. The trace detector (1) according to claim 1, wherein the first imager (5) preferably includes a matrix formed by several unit detectors (6), each unit detector (6) being able to create a charge when it receives a photon, each unit detector (6) having dimensions equal to or lower than 1 mm, advantageously than 200 μm.

4. The trace detector according to the preceding claim, wherein each unit detector is a photomultiplier, advantageously an avalanche photodiode.

5. The scintillation detector (1) according to one of claims 3 or 4, wherein the first imager (5) also includes a digital readout system able to identify which unit detector has received a photon.

6. The trace detector (1) according to one of the preceding claims, further including calculating means able to calculate the position of the emission place of each photon emitted in the scintillator from the images projected on the first imager by the micro lenses.

7. The trace detector according to one of the preceding claims, further including:

   - a second imager (8) able to detect each photon emitted by the scintillator;
   - a second array of micro lenses (9), each micro lens of the second array being arranged to form an image of the trace of the particles by focusing the photons emitted in the scintillator onto the second imager,

   the second array of micro lenses and the second imager extending perpendicular to the first array of micro lenses.

8. The trace detector according to one of the preceding claims, wherein each micro lens has dimensions between 0.5 and 5 mm.

9. The trace detector according to one of the preceding claims, wherein each micro lens has a numerical aperture between 0.2 and 0.3.

10. A gamma camera (1') including a trace detector according to one of the preceding claims.

11. The gamma camera according to the preceding claim, further including a coded mask (9).

Fig. 1

Fig. 2

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19505729 C1